# EUROPEAN PATENT SPECIFICATION

(11) **EP 1 091 470 B1**
(45) Date of publication and mention of the grant of the patent: **19.04.2006**
(21) Application number: 00850131.4
(22) Date of filing: 01.08.2000
(51) Int. Cl.: H02K 7/06, F16H 25/20

(54) **Automated disconnect mechanism**
Automatische Abschaltvorrichtung
Dispositif déconnecteur automatique

(30) Priority: 07.10.1999 US 414227
(43) Date of publication of application: 11.04.2001
(73) Proprietor: ITT MANUFACTURING ENTERPRISES, INC., Wilmington, Delaware 19801 (US)
(72) Inventor: Gorin, Jacob, Studio City, CA 91604 (US); Kim, Steve, Valencia, CA 91354 (US)
(74) Representative: Esser, Wolfgang

(56) References cited:
- WO-A-98/30816
- US-A- 4 858 481
- US-A- 5 832 779
- US-A- 5 916 325

## Description

### FIELD OF THE INVENTION

This invention relates generally to linear actuators, and more particularly to a linear actuator which automatically disconnects the output shaft assembly from the gear train at a predetermined position.

### BACKGROUND OF THE IMVENTION

Linear actuators are used to provide linear motion in a variety of applications. The basic design of a linear actuator consists of an electrical motor, gear train and the output shaft assembly (together with the ball or threaded screw as the main component generating linear movement of the output shaft). Typically, at the ends of the output shaft linear travel there are limit switches which disconnect the electrical power in the monitor and mechanical stops for preventing potential damage from the output shaft over travel in case of a limit switch failure. If manual operation of an actuator is required, the output shaft assembly should be disconnected from the actuator gear train to allow free movement of the output shaft. This design capability is necessary in case of electric power failure, for maintenance and more important, in case of emergency and safety concerns, as for instance, a foreign object which becomes trapped during retraction.

U.S. Patent No. 5,916,325 to Madrid et al. discloses a linear actuator, in which an electromechanical solenoid clutch is utilized to engage or disengage the linear actuator's gear train from an electric motor. When the solenoid is energized, it actuates a mechanical clutch system engaging the linear actuator's gear train to the electric motor. When the solenoid is de-energized, the mechanical clutch system disengages the linear actuator's gear train from the electric motor. Such linear actuator system requires a separate control to turn the solenoid on and off in order to control the linear actuator.

WO-A-9830816 discloses another linear actuator having a spindle rotatable in both directions, a threaded nut driving a piston rod, and a motor capable of driving the spindle through a transmission. The transmission includes a disengagement unit for disengaging spindle from the motor in case of spindle overload. The disengagement unit is an axially oriented coupling parts connected with the spindle and the transmission shaft, and which are surrounded by a helical coupling spring capable of being expanded radially for disengaging the spindle from the motor. The disengagement unit contains brake means rotationally adjustable with respect to the actuator housing to cooperate with coupling means for control of the rotational speed of the spindle when the spindle is disengaged from the motor.

Instead of the commonly used electromechanical (solenoid) dutch which requires continuous power consumption and generates heat, the apparatus according to the present invention disclosed herein automatically disconnects the output shaft assembly from the gear train at a full retracted position, when manual operation is mostly required; or if necessary, at full extended position. This design allows manual operation of the actuator without the use of an external cable and without electrical power. In addition, the apparatus according to the present invention provides for the incorporation of a device limiting the tension load exerted by the actuator along its entire stroke or at a specified location. As a result, the actuator will stop an operation when the tension load exceeds the preset threshold limit.

### SUMMARY OF THE INVENTION

A linear actuator for generating linear movement of a shaft member comprising an electrically powered gear train coupled to a shaft assembly disposed in a housing and including a rotatable member on which is mounted the shaft member for causing axial movement of the shaft member along an axis of the shaft assembly between a first extended position and a second retracted position; means responsive to the movement of the gear train for causing axial movement of a second member in proportion to the axial movement of the shaft member; disconnect means responsive to the axial position of the axially movable second member for automatically disconnecting power to the gear train when the second member reaches an at least one predetermined axial position to prohibit further axial movement of the shaft member; and decouple means for automatically decoupling the shaft assembly from the gear train according to an at least one given axial position associated with the shaft member or the second member.

A linear actuator for providing linear movement of a shaft member and having automatic disconnect and tension load limiting characteristics comprising an electrically powered gear train coupled to a shaft assembly for causing movement of the shaft member and an associated axially movable second member along an axis between a first extended position and a second retracted position; bearing means responsive to a predetermined tension or compression force threshold level exerted on the actuator for automatically disconnecting electrical power between the gear train and a motor when the predetermined tension or compression force level is achieved, thereby prohibiting further automated movement of the shaft member; means for automatically decoupling the shaft assembly from the gear train when the second member reaches the at least one predetermined position along the axis.

A linear actuator for providing linear motion of an output shaft member and automatically disconnecting the shaft member from a gear train. The linear actuator comprises a rotatable shaft adapted to be coupled to an electrically powered gear train causing rotation of the shaft; a shaft member mounted onto the rotatable shaft and axially movable between a retracted position and an extended position in response to rotation of the shaft; rotatable screw co-acting with the gear train to rotate in response to movement of the gear train; a second member coupled to the rotatable screw and axially movable in response to rotation of the screw between a first axial position and a second axial position; switch means located at the first position and responsive to engagement with the movable second member for causing an electrical disconnection between the gear train and a power source to cause termination of shaft rotation; and means coupled to the rotatable shaft for disconnecting the shaft from the gear train in response to the shaft member reaching the retracted position or the second member reaching the second axial position.

A linear actuator for providing linear motion of a shaft member comprising a rotatable shaft on which the shaft member is mounted, the shaft adapted to be coupled to an electrically powered gear such that rotation of the gear causes rotation of the shaft and corresponding translation of the shaft member between a first extended position and a second retracted position along an axis of the shaft; disconnect means responsive to the position of the axially moving shaft member for automatically disconnecting power to the gear train when the shaft member reaches a predetermined position along the shaft axis; and decouple means for automatically disengaging the shaft from the gear when the shaft member reaches a given position on the shaft axis.

According to another aspect of the present invention, the decoupling mechanism includes an annular collar which surrounds a portion of the rotatable shaft and is coupled to an output gear. The collar has a first interior diameter bore, and a second larger interior diameter bore. A moveable bearing mechanism is located within the collar and moveable between the first interior diameter and the second interior diameter bores. When the bearing mechanism is positioned within the first diameter bore, the mechanism operates to frictionally engage axial grooves formed on the rotatable shaft to cause engagement with the gear train. When the bearing mechanism is displaced into the second larger diameter, this causes disengagement with the axial grooves on the rotatable shaft and permits movement of either one of the shaft assembly or the gear train without corresponding movement of the other. It is a further object of the present invention to provide an axially moveable sleeve member mounted on the rotatable shaft and moveable in response to a force resulting from the axially moveable second member or the shaft member when either the second member or the shaft member is located at the given position on the shaft associated with the shaft axis for moving a predetermined distance in a first direction to displace the bearing mechanism into the larger diameter interior surface of the collar, thereby causing decoupling of the shaft assembly from the gear train.

### BRIEF DESCRIPTION OF THE DRAWINGS

Figure 1A is a schematic cross-sectional view of the linear actuator incorporating the automatic disconnect and tension load limiting features according to the present invention.
Figure 1B is a schematic cross-sectional diagram illustrating the automatic disconnect and tension load limiter features shown in Figure 1A in greater detail.
Figure 1C is an exploded view of the ball screw rod end shown in Figure 1B.
Figure 1D is an exploded view of the output gear module of Figure 1B.
Figure 1E illustrates an exploded view of the sleeve portion of the linear actuator of shown in Figure 1B.
Figure 1F illustrates an exploded view of the cup portion of the linear actuator illustrated in Figure 1B according to the present invention.
Figure 1G illustrates a cross-sectional view taken along Section A-A of the linear actuator shown in Figure 1B according to the present invention.
Figure 2 illustrates a cross-sectional view of the linear actuator of the present invention in a retracted position.
Figure 3 illustrates a cross-sectional view of the linear actuator of the present invention in an extended position.
Figure 4 illustrates a cross-sectional view of an alternate embodiment of the linear actuator of the present invention in an extended position without disconnection of the ball screw.
Figure 5 is a cross-sectional view of the linear actuator according to the present invention under a limited tension load.
Figure 6 is a cross-sectional view of the linear actuator according to the present invention under tension load set specified positions.
Figure 7 illustrates a view of the linear actuator manually disengaged via an external handle.

### DETAILED DESCRIPTION OF THE INVENTION

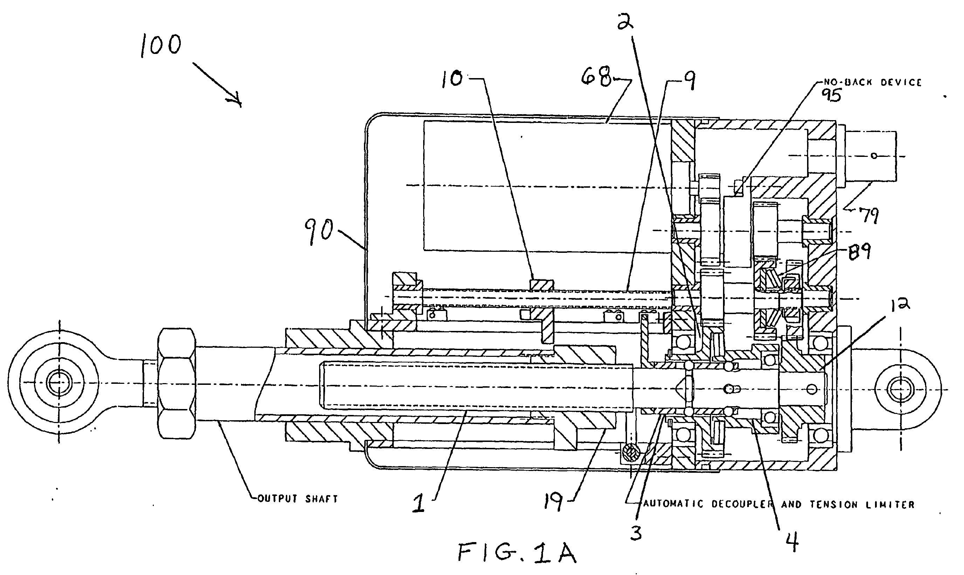

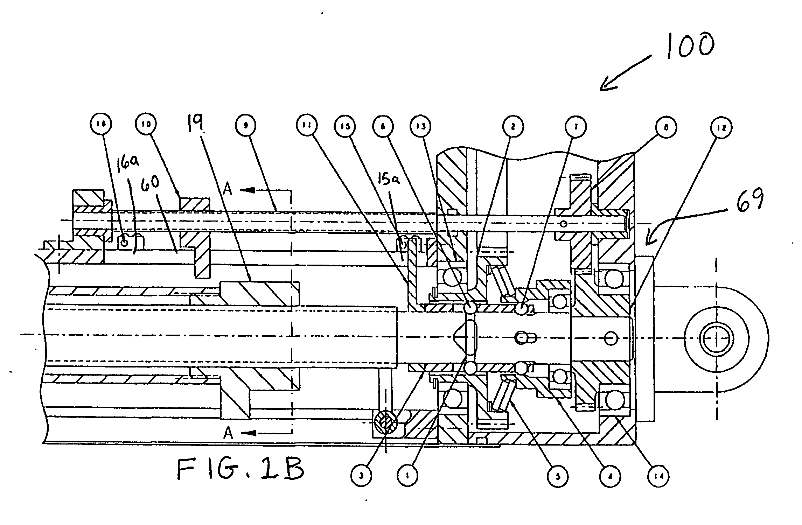

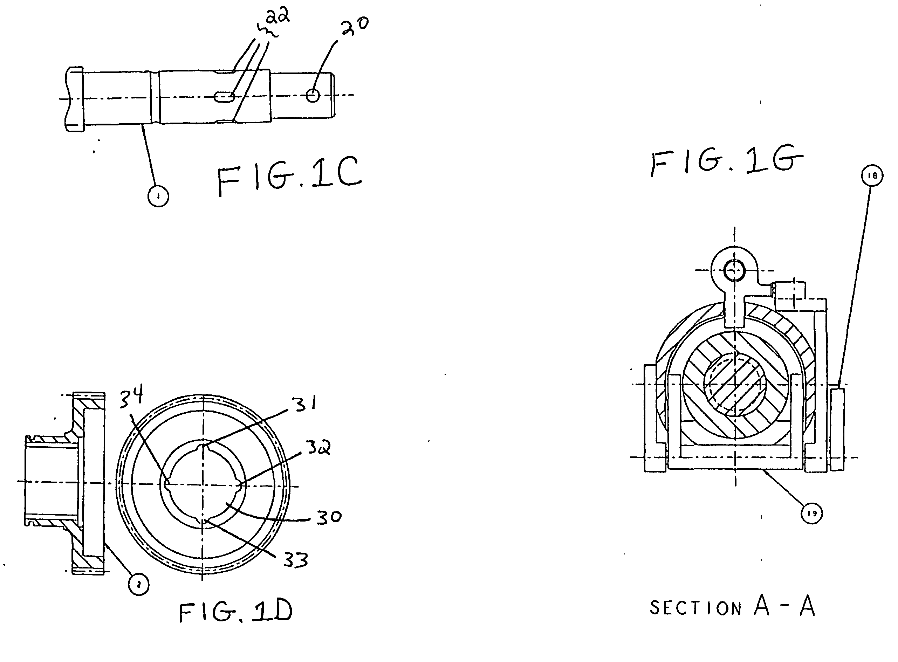

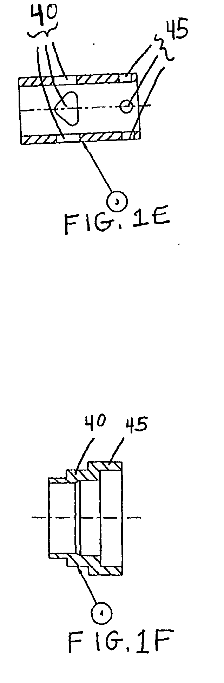

Referring now to Figures 1 A-F, there is shown a linear actuator 100 having a disconnect mechanism and tension load limiter disposed in a housing 90 for limiting the tensile force on the shaft 1. The specific features of actuator 100 include shaft or 'ball screw rod 1 having one circular groove 20 and four axial grooves 22 on the exterior of the shaft as shown (the number of axial grooves depends on transmitted torque) in Fig. 1C. In referring to the drawings like reference numerals are used to indicate like parts. Output gear 2, as will described in more detail later operates to create an axial force in a given direction for moving sleeve 3 to cause engagement of the ball screw rod 1 with gear 12. Output gear 2 includes four axial grooves 31,32,33,34 on its internal diameter 30, as shown in Fig 1 D (Top view). Sleeve 3 contains four triangular shaped slots 40 and four holes 45 as shown in Fig. 1 E. Annular cup or collar 4 contains both a small 50 and a large 55 internal diameter bores, belleville springs 5 and adapter 11. In assembly as best shown in Figs. 1A and 1B, there are two sets of moveable spheres or balls installed as follows: four balls 6 are disposed in the triangular slots 40 on the sleeve 3 trapped between the output gear 2 and the ball screw rod end 1, and another four balls 7 in the holes 45 on the sleeve within axial grooves 22 (Fig. 1 C) on the ball screw rod 1 and one of the internal diameters of the cup 4. The ball screw rod end 1 carries a gear 12 in toothed engagement with idler gear 8 which rotates a threaded screw 9 and causes an axial movement of its nut 10 in a slot 60. This threaded nut operates two electrical limit switches 15 and 16 to control the stroke of the actuator. Torque limiter feature 89 comprising belleville springs in engagement with idler gear 8 operates to limit the torque applied to threaded screw 9. Ball screw rod 1 is coupled to electrically powered gear train gear 12 to cause rotation of the ball screw rod in direct response to movement of the gear. A shaft member mounted onto ball screw rod 1, such as nut 19, is translatable (i.e. axially moveable) between a retracted position and an extended position in response to rotation of ball screw rod 1. Note that rotatable screw 9 is positioned substantially parallel to the rotatable ball screw 1. Screw 9 is rotated by idler gear 8, which in turn is moved via gear 12. Moveable nut 10 is mounted on screw 9 such that rotation of the screw causes axial movement of nut 10 along the axis of screw 9.

The electrical limit switches 15 and 16 are adjusted to a position within the slot so as to be in alignment with the nut 10 so that the nut engages and activates the limit switch upon reaching the corresponding axial position (i.e. 16A or 15A) which causes the corresponding switch to terminate the connection between the electrical motor 68 and the gear train 10 including the gear 12 and idler gear 8, Electrical connector 79 coupled through housing 90 provides electrical connectivity from a standard power source to the motor and overall linear actuator unit in conventional fashion. As previously mentioned, rotatable screw 9 is in parallel alignment with and rotatable in concert with the rotatable ball is srew 1. Accordingly, each of the correspondingly mounted nuts 10 and 19 translate on their respective parallel axes in concert and in proportion to one another. As one can ascertain, the direction of axial movement of the nut 10 is opposite the direction of axial movement of ball screw nut 19. Note that, as shown in Figures 1-3 and 5-7, threaded screws 1 and 9 are separated from one another within the housing by a sufficient distance so that nuts 10 and 19 do not engage one another during translation, but rather move freely along their axes over the course of the stroke.

When the actuator is commanded to extend in electrical operation as shown in Figure 1B (via conventional means), the output gear 2 moves the balls 6 dong the slopes of the triangular shaped slots 40 and creates an axial force which moves the sleeve 3 to the left and brings the balls 7 into the small internal diameter of the cup 4. At this point, the ball screw 1 is locked up with the gear train gear 12 and the actuator extends the output shaft such that movement of the gear causes rotation of the ball screw. Similarly, due to the triangular shape of the sleeving slots, the sleeve 3 shifts to the left and the ball screw engagement will occur when the actuator is commanded to retract.

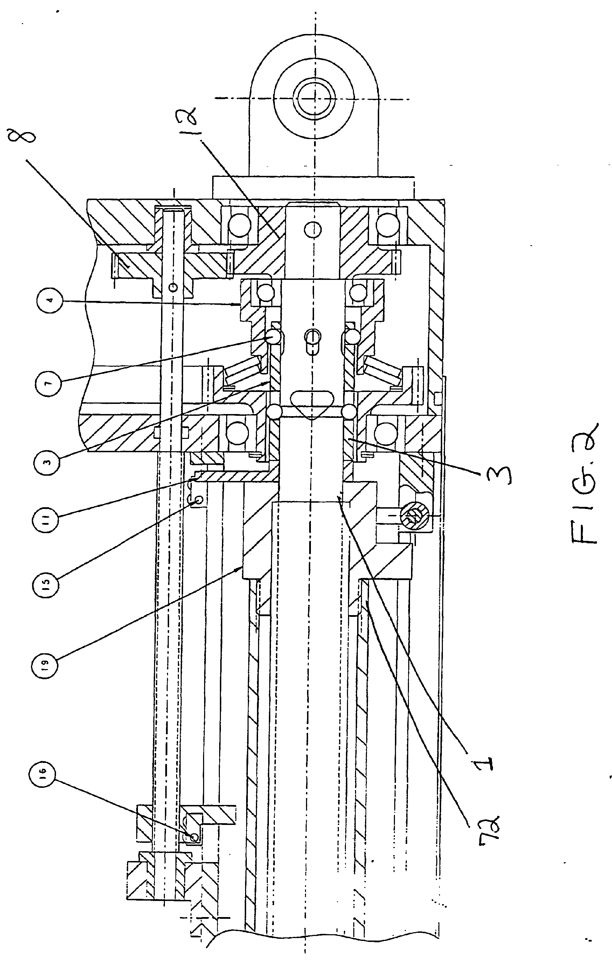

Figure 2 provides an illustration of the actuator 100 according to the present invention in a retracted position. Referring now to Figure 2, when the actuator is fully retracted, the electric power from the motor to the gear train is disconnected by the limit switch 16 engaging nut 10. The ball screw nut 19 mounted on ball screw rod 1 and translatable between a first extended position and a second retracted position is moved in its slot 72 into the retracted position and forceably engages adapter 11. Adaptor 11 translates this force to sleeve 3, which moves to the right and disengages balls 7 by positioning them into larger internal diameter of the cup 4. Hence the ball screw 1 is disconnected from the gear train 12 and the actuator rod is now free to move and ready for manual operation.

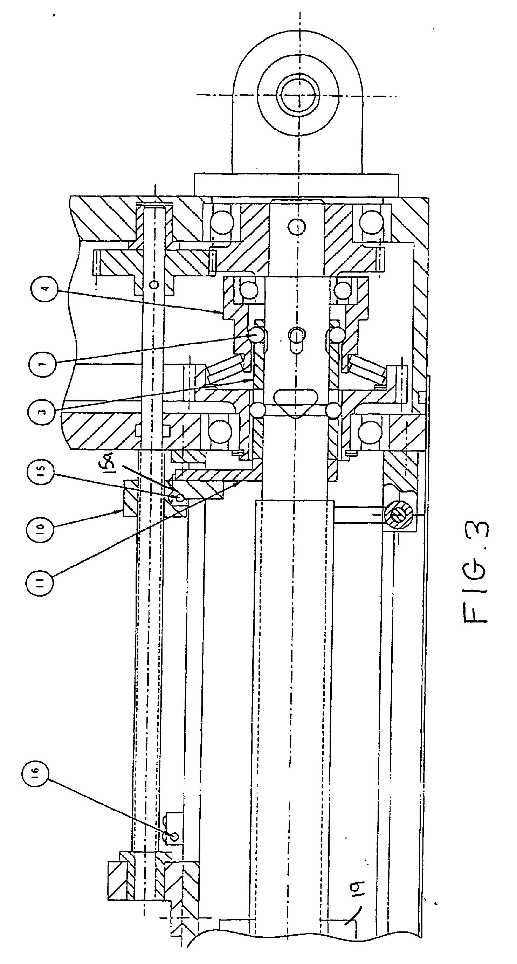

Figure 3 represents an actuator 100 in a fully extended position. When the actuator is fully extended, the electric power is disconnected by the engagement of nut 10 with limit switch 15. The threaded auxiliary nut 10 is moved in its slot at axial position 15a and similarly shifts the sleeve 3 through adapter 11 to the right and disengages the balls 7 by positioning them into the larger internal diameter of the cup 4.

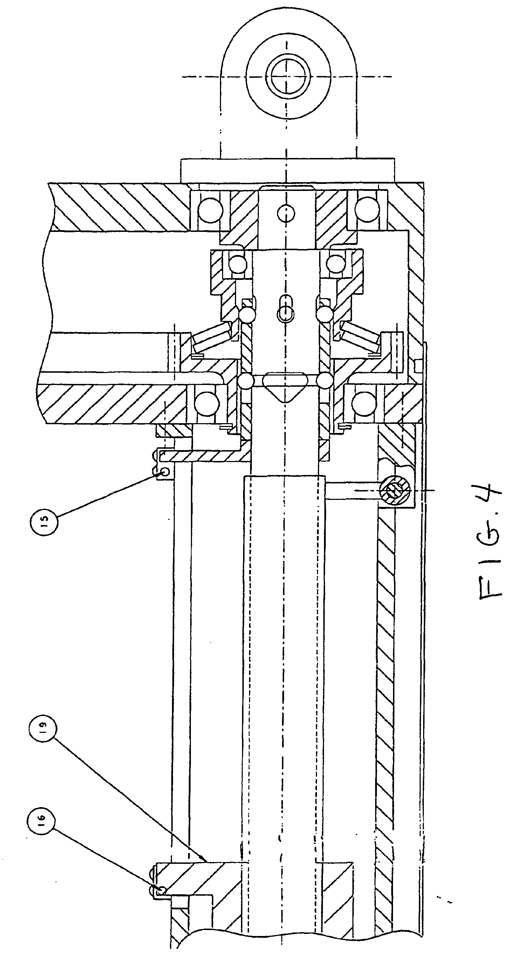

In an alternative embodiment shown in Figure 4, the disconnection of the ball screw from the gear train in full extended position may be prevented by eliminating the idler gear 8, adapter 11 and the auxiliary screw 9 with its nut 10. In this case, the ball screw nut 19 directly operates electrical limit switches 15 and 16 to control the stroke of the actuator, as shown in Figure 4.

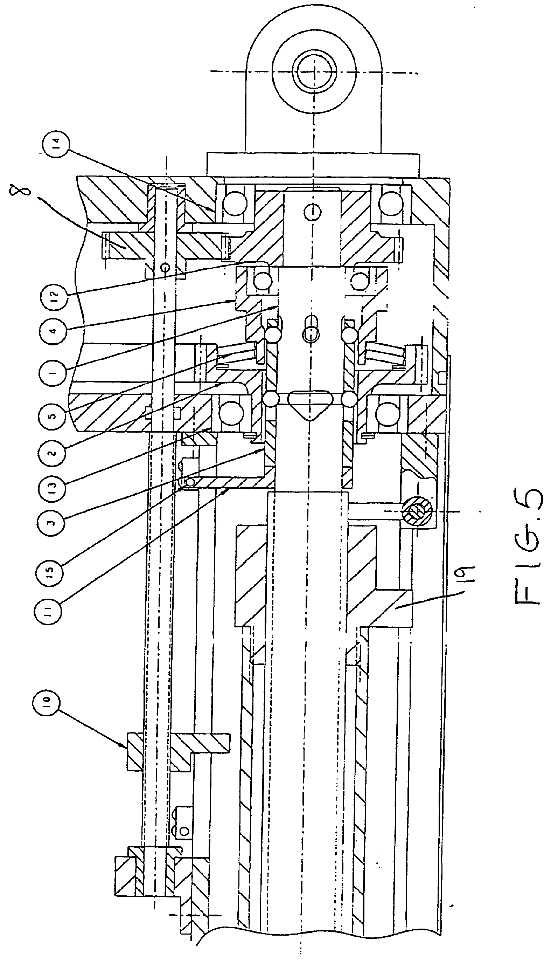

Referring now to Figure 5, the automatic disconnect mechanism incorporates two angular contact bearings 13 and 14, to take up the thrust loads right bearing - compression, left - tension. Under compression the thrust load is transmitted directly to the right bearing 14 and gear 12. During an operation under tension load, the ball screw 1 with cup 4 by squeezing the spring 5 and together with sleeve 3 shifts to the left and then the load through output gear 2 is transmitted to the left bearing 13. When the tension load reaches a preset limit, the shifted sleeve 3 through adapter 11 presses the limit switch 15 which disconnects the electrical motor. The same switch operates to disconnect the electrical motor at the end of the travel by the moving auxiliary nut 10. This way, the tension load could be limited during retraction and along the entire stroke of the actuator.

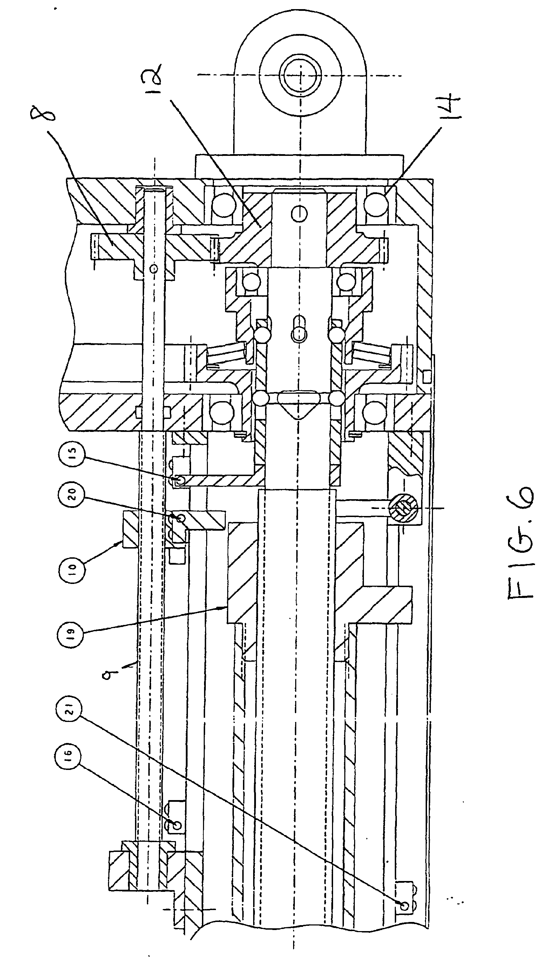

To limit the tension load at a specified location, as illustrated in Figure 6, two limit switches may be pressed simultaneously: switch 15, by the sleeve 3, and the additional switch 20, installed at a specified location, by the moving auxiliary nut 10. If these two switches are located close to one another, then the width of the auxiliary nut should be designed to enable depression of both of them at the end of the stroke. If the required location is far from the end of the travel, or for other design considerations, an independent travel limit switch 21, could be used which would be operated by the moving ball screw nut 19 at the end of the stroke.

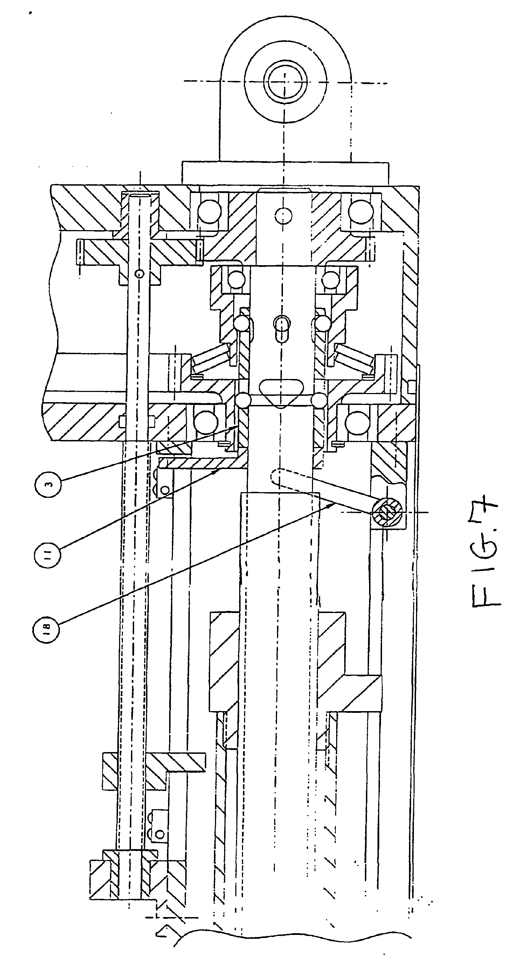

The proposed design provides for an external handle (shown in Figure 1B Section A-A) to permit, if necessary, manual operation (opening or closing) when the actuator is partially extended. As shown in Figure 7, by turning the handle to the right, the lever 18 pushes the sleeve 3 through adapter 11 and disconnects the ball screw from gear train and allows manual operation.

## Claims

1. A linear actuator (100) for generating linear movement of a shaft member (19) comprising:
an electrically powered gear train coupled to a shaft assembly disposed in a housing (90), and including a rotatable member (1) on which is mounted said shaft member (19) for causing axial movement of said shaft member along an axis of said shaft assembly between a first extended position and a second retracted position;
means (8,9,12) responsive to the movement of said gear train for causing axial movement of a second member (10) in proportion to the axial movement of said shaft member;
disconnect means (15,16) responsive to the axial position of said axially movable second member (10) for automatically disconnecting power to said gear train when said second member reaches an at least one predetermined axial position to prohibit further axial movement of said shaft member; and
decouple means for automatically decoupling the shaft assembly from the gear train according to an at least one given axial position associated with said shaft member or second member.

2. The linear actuator according to claim 1, wherein said disconnect means includes a switch (15,16) coupled to said housing (90) and in alignment with said axially movable second member (10) at said predetermined position and operative to disconnect power between a power source and said gear train when said axially movable second member engages said switch.

3. The linear actuator according to claim 1, wherein the direction of movement of said shaft member (19) is opposite the direction of movement of said second axially movable member (10).

4. The linear actuator according to claim 3, wherein said at least one predetermined position comprises said first extended position and said second retracted position.

5. The linear actuator according to claim 4, wherein said disconnect means includes first and second switches (15,16) coupled to said housing, each operative to terminate connectivity between said gear train and a power source upon activation, said first switch (15) in alignment with said axially moveable second member (10) at said first extended position (15a) and said second switch (16) in alignment with said axially moveable second member at said second retracted position (16a) whereby said axially movable second member (10) engages said first or second switch upon reaching said corresponding first extend or second retracted position, thereby activating said corresponding first or second switch and terminating power to said gear train.

6. The linear actuator according to claim 1, wherein said gear train includes a first gear (12) for rotating said rotatable member (1), and a second gear (8) in toothed engagement with said first gear; and
wherein said means for causing axial movement of said movable second member comprises:
a rotatable threaded screw (9) positioned substantially parallel to said rotatable member (1) and rotatable by said second gear (8), said moveable second member (10) mounted on said rotatable screw (9) such that rotation of said screw causes axial movement of said moveable second member along an axis of said screw.

7. The linear actuator according to claim 6 wherein said axially movable member (10) comprises an axially movable internally threaded nut mounted on said rotatable threaded screw (9), said rotatable threaded screw rotatable in concert with said shaft assembly rotatable member (1) such that rotation of said screw causes axial movement of said nut along an axis of said screw (9) in a direction opposite the direction of axial movement of said shaft member.

8. The linear actuator according to claim 1, wherein said decoupling means for decoupling the shaft assembly from the gear train comprises:
an annular collar (4) surrounding a portion of said rotatable member (1) and coupled to said gear train, said collar having a first interior diameter bore (50) and a second larger interior diameter bore (55);
bearing means (7) movable within said collar between said first interior diameter (50) and said second interior diameter (55) bores for frictionally engaging said collar (4) to cause engagement of said gear train with said rotatable member when said bearing means is within said first diameter bore, and when said bearing means is displaced into said second larger diameter bore, for causing disengagement with said collar to permit movement of either one of said shaft assembly or said gear train without corresponding movement of the other one; and
an axially movable sleeve member (3) mounted on said rotatable member (1) and responsive to a force resulting from said axially movable second member or said shaft member when either said second member or said shaft member is located at said given axial position for moving a predetermined distance in a first direction to displace said bearing means (7) into said larger diameter interior surface of said collar, thereby causing decoupling of the shaft assembly from the gear train.

9. The linear actuator according to claim1, further comprising manual means (18) mounted on said rotatable shaft and responsive to a manual force for causing said gear train to disengage from said rotatable shaft to allow manual operation of said actuator (100).

## Patentansprüche

1. Ein lineares Stellglied (100) zur Erzeugung einer linearen Bewegung eines Schaftteils (19), bestehend aus:
einem elektrisch betriebenen Getriebe, das mit einer Schafteinheit verbunden ist, die in einem Gehäuse (90) angeordnet ist und ein drehbares Teil (1) umfasst, auf dem das genannte Schaftteil (19) montiert ist, um eine axiale Bewegung des genannten Schaftteils entlang einer Achse der genannten Schafteinheit zwischen einer ersten ausgefahrenen Position und einerzweiten eingeschobenen Position zu bewirken;
Mittel (8, 9, 12), die auf die Bewegung des genannten Getriebes reagieren, um eine axiale Bewegung eines zweiten Teils (10) im Verhältnis zur axialen Bewegung des genannten Schaftteils zu bewirken;
Trennvorrichtungen (15, 16), die auf die axiale Position des genannten, axial beweglichen zweiten Teils (10) reagieren, zur automatischen Trennung des genannten Getriebes von der Stromversorgung, wenn das genannte zweite Teil mindestens eine vordefinierte axiale Position erreicht, um die weitere axiale Bewegung des genannten Schaftteils zu verhindem; und Entkopplungsmittel zur automatischen Entkopplung der Schafteinheit vom Getriebe gemäß mindestens einer vorgegebenen axialen Position, die dem genannten Schaftteil oder dem zweiten Teil zugeordnet ist.

2. Das lineare Stellglied gemäß Anspruch 1, wobei die genannte Trennvorrichtung einen Schalter (15, 16) umfasst, der mit dem genannten Gehäuse (90) gekoppelt und an dem genannten, axial beweglichen zweiten Teil (10) in der genannten, vordefinierten Position ausgerichtet ist und das Abschalten der Stromversorgung und des genannten Getriebes bewirken kann, wenn das genannte, axial bewegliche zweite Teil in den genannten Schalter eingreift.

3. Das lineare Stellglied gemäß Anspruch 1, wobei die Bewegungsrichtung des genannten Schaftteils (19) entgegengesetzt zur Bewegungsrichtung des zweiten, axial beweglichen Teils (10) verläuft.

4. Das lineare Stellglied gemäß Anspruch 3, wobei die genannte mindestens eine vordefinierte Position die genannte erste ausgefahrene Position und die genannte zweite eingeschobene Position umfasst.

5. Das lineare Stellglied gemäß Anspruch 4, wobei die genannte Trennvorrichtung erste und zweite Schalter (15, 16) umfasst, die mit dem genannten Gehäuse gekoppelt sind, wobei jeder die Trennung der Stromzufuhr zwischen dem genannten Getriebe und einer Stromquelle nach der Betätigung des genannten ersten Schalters (15) in der Ausrichtung des genannten axial beweglichen zweiten Teils (10) in der genannten ersten ausgefahrenen Position (15a) und des genannten zweiten Schalters (16) in Ausrichtung des genannten beweglichen zweiten Teils in der genannten zweiten eingeschobenen Position (16a) bewirken kann, wobei das genannte axial bewegliche zweite Teil (10) in den genannten ersten oder zweiten Schalter eingreift, nachdem die genannte, entsprechende erste ausgefahrene oder zweite eingeschobene Position erreicht wurde, wodurch der genannte, entsprechende erste oder zweite Schalter betätigt wird und die Stromversorgung für das genannte Getriebe unterbricht.

6. Das lineare Stellglied gemäß Anspruch 1, wobei das genannte Getriebe eine erste Übersetzung (12) zur Drehung des genannten drehbaren Teils (1) und eine zweite Übersetzung (8) mit Zahneingriff in die erste Übersetzung umfasst; und
wobei das genannte Mittel zur Bewirkung einer axialen Bewegung des genannten beweglichen zweiten Teils umfasst:
eine drehbare Gewindeschraube (9), die in etwa parallel zu dem genannten drehbaren Teil (1) angeordnet ist und von der genannten zweiten Übersetzung (8) gedreht werden kann, wobei das genannte bewegliche zweite Teil (10) auf der genannten drehbaren Schraube (9) montiert ist, so dass die Drehung der genannten Schraube eine axiale Bewegung des genannten beweglichen zweiten Teils entlang einer Achse der genannten Schraube bewirkt.

7. Das lineare Stellglied gemäß Anspruch 6, wobei das genannte axial bewegliche Teil (10) eine axial bewegliche Mutter mit Innengewinde umfasst, die auf der genannten drehbaren Gewindeschraube (9) montiert ist, wobei die genannte Gewindeschraube drehbar mit dem drehbaren Teil (1) der genannten Schafteinheit zusammenwirkt, so dass die Drehung der genannten Schraube eine axiale Bewegung der genannten Mutter entlang einer Achse der genannten Schraube (9) in einer zur Richtung der axialen Bewegung des genannten Schaftteils entgegengesetzten Richtung bewirkt.

8. Das lineare Stellglied gemäß Anspruch 1, wobei das genannte Entkopplungsmittel zur Entkopplung der Schafteinheit vom Getriebe umfasst:
einen ringförmigen Ansatz (4), der einen Bereich des genannten drehbaren Teils (1) umgibt und mit dem genannten Getriebe gekoppelt ist, wobei der genannte Ansatz eine erste Innenbohrung (50) und eine zweite, größere Innenbohrung (55) aufweist,
Lagermittel (7), die innerhalb des genannten Ansatzes zwischen der genannten ersten Innenbohrung (50) und der genannten zweiten Innenbohrung (55) zum Reibschluss mit dem genannten Ansatz (4) beweglich sind, um das Eingreifen des genannten Getriebes in das genannte drehbare Teil zu bewirken, wenn sich das genannte Lagermittel innerhalb der genannten ersten Innenbohrung befindet, und wenn das genannte Lagermittel in die genannte zweite, größere Innenbohrung verschoben wird, um das Auskoppeln des genannten Ansatzes zu bewirken, um die Bewegung einer der genannten Schafteinheiten oder des genannten Getriebes, ohne die entsprechende Bewegung des anderen zu bewirken; und
ein axial bewegliches Muffenteil (3), das auf dem genannten drehbaren Teil (1) montiert ist und auf eine Kraft reagiert, die aus dem genannten axial beweglichen zweiten Teil oder dem genannten Schaftteil resultiert, wenn sich entweder das genannte zweite Teil oder das genannte Schaftteil in der genannten vorgegebenen axialen Position befindet, um sich e i-ne vordefinierte Strecke in einer ersten Richtung zur Verschiebung
der genannten Lagermittel (7) in die genannte, größere Innenbohrung des genannten Ansatzes zu bewegen, wodurch die Entkopplung der Schafteinheit vom Getriebe bewirkt wird.

9. Das lineare Stellglied gemäß Anspruch 1, das außerdem eine manuelle Vorrichtung (18) umfasst, die auf dem genannten drehbaren Schaft montiert ist und auf eine manuelle Kraft reagiert, um zu bewirken, dass sich das genannte Getriebe von dem genannten drehbaren Schaft entkoppelt, um die manuelle Betätigung des genannten Stellglieds (100) zu ermöglichen.

## Revendications

1. Actionneur linéaire (100) pour générer un mouvement linéaire d'un élément formant tige (19), comprenant :
un train d'engrenages à entraînement électrique couplé à un ensemble formant tige disposé dans un boîtier (90) et incluant un élément rotatif (1) sur lequel est monté ledit élément formant tige (19) pour provoquer un mouvement axial dudit élément formant tige le long d'un axe dudit ensemble formant tige entre une première position en extension et une seconde position rétractée ;
des moyens (8, 9, 12) qui réagissent au mouvement dudit train d'engrenages pour provoquer un mouvement axial d'un second élément (10) en proportion du mouvement axial dudit élément formant tige ;
des moyens de déconnexion (15, 16) qui réagissent à la position axiale dudit second élément (10) axialement mobile pour détecter automatiquement la puissance vers ledit train d'engrenages quand ledit second élément atteint au moins une position axiale prédéterminée pour empêcher une poursuite du mouvement axial dudit élément formant tige ; et
des moyens de désaccouplement pour automatiquement désaccoupler l'ensemble formant tige par rapport au train d'engrenages suivant au moins une position axiale donnée associée audit élément formant tige ou audit second élément.

2. Actionneur linéaire selon la revendication 1, dans lequel lesdits moyens de déconnexion incluent un commutateur (15, 16) couplé audit boîtier (90) et en alignement avec ledit second élément axialement mobile (10) à ladite position prédéterminée et capable de fonctionner pour déconnecter la puissance entre une source de puissance et ledit train d'engrenages lorsque ledit second élément axialement mobile engage ledit commutateur.

3. Actionneur linéaire selon la revendication 1, dans lequel la direction de mouvement dudit élément formant tige (19) est opposée à la direction de mouvement dudit second élément axialement mobile (10).

4. Actionneur linéaire selon la revendication 3, dans lequel ladite au moins une position prédéterminée comprend ladite première position en extension et ladite seconde position rétractée.

5. Actionneur linéaire selon la revendication 4, dans lequel lesdits moyens de déconnexion incluent un premier et un second commutateur (15, 16) couplés audit boîtier, chacun étant capable de fonctionner pour terminer la connexion entre ledit train d'engrenages et une source de puissance lors de son activation, ledit premier commutateur (15) étant en alignement avec ledit second élément axialement mobile (10) à ladite première position en extension (15a), et ledit second commutateur (16) étant en alignement avec ledit second élément axialement mobile à ladite seconde position rétractée (16a), grâce à quoi ledit second élément axialement mobile (10) engage ledit premier commutateur ou ledit second commutateur lorsqu'il atteint ladite première position en extension ou ladite seconde position rétractée correspondante, en activant ainsi ledit premier ou ledit second commutateur correspondant et terminant l'amenée de puissance audit train d'engrenages.

6. Actionneur linéaire selon la revendication 1, dans lequel ledit train d'engrenages inclut un premier engrenage (12) pour mettre en rotation ledit élément rotatif (1), et un second engrenage (8) en engagement d'engrènement avec ledit premier engrenage ; et
dans lequel lesdits moyens pour provoquer un mouvement axial dudit second élément mobile comprennent :
une vis filetée rotative (9) positionnée sensiblement parallèle audit élément rotatif (1) et mise en rotation par ledit second engrenage (8), ledit second élément mobile (10) étant monté sur ladite vis rotative (9) de telle façon qu'une rotation de ladite vis provoque un mouvement axial dudit second élément mobile le long d'un axe de ladite vis.

7. Actionneur linéaire selon la revendication 6, dans lequel ledit élément axialement mobile (10) comprend un écrou taraudé axialement mobile monté sur ladite vis filetée rotative (9), ladite vis filetée rotative étant capable de tourner de concert avec ledit élément rotatif (1) de l'ensemble formant tige, de sorte qu'une rotation de ladite vis provoque un mouvement axial dudit écrou le long d'un axe de ladite vis (9) dans une direction opposée à la direction du mouvement axial dudit élément formant tige.

8. Actionneur linéaire selon la revendication 1, dans lequel lesdits moyens de désaccouplement pour désaccoupler l'ensemble formant tige vis-à-vis du train d'engrenages comprennent :
un collier annulaire (4) entourant une portion dudit élément rotatif (1) et couplé audit train d'engrenages, ledit collier ayant un perçage avec un premier diamètre intérieur (50) et un perçage avec un second diamètre intérieur plus large (55),
des moyens formant palier (7) mobiles avec ledit collier entre ledit perçage avec premier diamètre intérieur (50) et ledit perçage avec second diamètre intérieur (55) pour engager en friction ledit collier (4) et provoquer l'engagement dudit train d'engrenages avec ledit élément rotatif quand lesdits moyens formant palier se trouvent dans ledit perçage de premier diamètre et, quand lesdits moyens formant palier sont déplacés vers ledit perçage de second diamètre plus large, pour provoquer le désengagement avec ledit collier et permettre le mouvement soit dudit ensemble formant tige soit dudit train d'engrenages sans mouvement correspondant de l'autre ; et
un élément en fourreau (3) axialement mobile, monté sur ledit élément rotatif (1) et réagissant à une force résultant dudit second élément axialement mobile ou dudit élément formant tige quand l'un ou l'autre dudit second élément et dudit élément formant tige est placé à ladite position axiale donnée pour se déplacer d'une distance prédéterminée dans une première direction pour déplacer lesdits moyens formant palier (7) dans la surface intérieure de grand diamètre dudit collier, provoquant ainsi un désaccouplement de l'ensemble formant tige vis-à-vis du train d'engrenages.

9. Actionneur linéaire selon la revendication 1, comprenant en outre des moyens manuels (18) montés sur ladite tige rotative et réagissant à une force manuelle pour amener ledit train d'engrenages à se désengager vis-à-vis de ladite tige rotative et permettre l'actionnement manuel dudit actionneur (100).
